# EUROPEAN PATENT APPLICATION

(11) **EP 1 628 104 A2**
(43) Date of publication of application: **22.02.2006**
(21) Application number: 05001455.4
(22) Date of filing: 25.01.2005
(51) Int. Cl.: F25B 27/02, F02G 5/04

(54) **Cogeneration system**

(30) Priority: 17.08.2004 KR 2004064816
(71) Applicant: LG ELECTRONICS INC., Seoul 150-010 (KR)
(72) Inventor: Kang, Seung Tak, Keumchun-ku Seoul 153-010 (KR); Choi, Chang Min, Kwanak-ku Seoul-si 151-055 (KR); Choi, Won Jae, Kwangjin-ku Seoul 143-210 (KR); Lim, Hyung Soo, Yongsan-ku Seoul 140-030 (KR); Hwang, Yoon Jei, Yongdeungpo-ku Seoul-si 151-010 (KR)
(74) Representative: TER MEER - STEINMEISTER & PARTNER GbR

(57) **Abstract**

A cogeneration system including an engine (2), a generator (10) connected to an output shaft of the engine to generate electricity, and a waste heat recovering means (40) to recover waste heat of the generator and to transfer the recovered waste heat to a heat consumer (20). Since waste heat of the generator is supplied to the heat consumer, the cogeneration system exhibits a high energy efficiency while achieving release of heat from the generator.

## Description

### BACKGROUND OF THE INVENTION

### Field of the Invention

The present invention relates to a cogeneration system, and, more particularly, to a cogeneration system in which waste heat of a generator is recovered, and is supplied to a heat consumer.

### Description of the Related Art

In general, cogeneration systems include an engine, a generator to generate electricity, using a rotating force outputted from the engine, and a heat transfer means to supply waste heat of the engine to a heat consumer such as a water heater or an air conditioner.

Electricity generated from the generator is used to operate electrical devices such as electric lamps.

A cooling fan is equipped in the generator to release heat from the generator.

The heat transfer means recovers waste heat of cooling water used to cool the engine or waste heat of exhaust gas discharged from the engine, and supplies the recovered waste heat to a water heater or an air conditioner.

However, such a conventional cogeneration system has problems of an increase in noise occurring during operation of the cooling fan, inefficient re-use of waste heat of the generator, and limited enhancement in the efficiency of the system.

### SUMMARY OF THE INVENTION

The present invention has been made in view of the above-mentioned problems, and it is an object of the invention to provide a cogeneration system in which waste heat of a generator is recovered, and is used in a heat consumer, so that the efficiency of the system is enhanced.

In accordance with one aspect, the present invention provides a cogeneration system comprising: an engine; a generator connected to an output shaft of the engine to generate electricity; and waste heat recovering means to recover waste heat of the generator and to transfer the recovered waste heat to a heat consumer.

The waste heat recovering means may comprise a heat medium circulation conduit to guide a heat medium to be circulated through the generator and the heat consumer, and a heat medium circulation pump to pump the heat medium, and thus, to circulate the heat medium to be circulated through the heat medium circulation conduit.

In accordance with another aspect, the present invention provides a cogeneration system comprising: an engine; a generator connected to an output shaft of the engine to generate electricity; and waste heat recovering means to recover waste heat of the engine and waste heat of the generator and to transfer the recovered waste heat to a heat consumer.

The waste heat recovering means may comprise a cooling water heat exchanger to absorb heat from cooling water used to cool the engine, an exhaust gas heat exchanger to absorb heat from exhaust gas discharged from the engine, a first heat medium circulation conduit to guide a first heat medium to be circulated through the generator, the cooling water heat exchanger, and the heat consumer, and a second heat medium circulation conduit to guide a second heat medium to be circulated through the exhaust gas heat exchanger and the heat consumer.

The waste heat recovering means may further comprise a first heat medium circulation pump to pump the first heat medium, and thus, to circulate the first heat medium to be circulated through the first heat medium circulation conduit, and a second heat medium circulation pump to pump the second heat medium, and thus, to circulate the second heat medium to be circulated through the second heat medium circulation conduit.

The waste heat recovering means may further comprise a heat medium heater to heat the first heat medium emerging from the cooling water heat exchanger, and exhaust gas path switching means to supply the exhaust gas discharged from the engine to the heat medium heater or to the exhaust gas heat exchanger.

The exhaust gas path switching means may comprise an exhaust conduit to guide the exhaust gas discharged from the engine to the exhaust gas heat exchanger, a branched conduit, which is branched from the exhaust conduit, and connected to the heat medium heater, and a control valve to alternately open/close the exhaust conduit and the branched conduit.

The heat consumer may be a heat pump type air conditioner, which uses the electricity generated from the generator, and comprises a compressor, a directional valve, an outdoor heat exchanger, an expansion device, and an indoor heat exchanger.

The heat pump type air conditioner may further comprise a pre-heater to pre-heat outdoor air blown toward the outdoor heat exchanger, using heat of the heat medium, which is circulated through one of the first and second heat medium circulation conduits, and a compressor discharge line heater to heat a refrigerant passing through a discharge line of the compressor, using heat of the heat medium, which is circulated through the other one of the first and second heat medium circulation conduits.

At least one of the engine, the generator, the compressor, the directional valve, the outdoor heat exchanger, the expansion device, the indoor heat exchanger, the pre-heater, and the compressor discharge line heater may comprise a plurality of ones.

In accordance with another aspect, the present invention provides a cogeneration system comprising: an engine; a generator connected to an output shaft of the engine to generate electricity; a heat pump type air conditioner, which uses the electricity generated from the generator, and comprises a compressor, a directional valve, an outdoor heat exchanger, an expansion device, and an indoor heat exchanger; a pre-heater to pre-heat outdoor air blown toward the outdoor heat exchanger; a compressor discharge line heater to heat a refrigerant passing through a discharge line of the compressor; and waste heat recovering means to transfer, to the pre-heater, waste heat of the generator, heat of cooling water of the engine, and heat of exhaust gas of the engine when the heat pump type air conditioner operates in a heating mode under a condition in which the outdoor heat exchanger is frosted, and to transfer the waste heat of the generator and the cooling water heat of the engine to the pre-heater and the exhaust gas heat of the engine to the discharge line of the compressor when the heat pump type air conditioner operates in the heating mode, but not under the condition in which the outdoor heat exchanger is frosted.

The cogeneration system according to the present invention has an advantage in that waste heat of the generator is supplied to the heat consumer, so that it is possible to enhance the energy efficiency of the cogeneration system and to release heat from the generator.

The cogeneration system according to the present invention also has an advantage in that waste heat of the generator and waste heat of the engine are supplied to the heat consumer, so that it is possible to enhance the energy efficiency of the cogeneration system.

Also, the cogeneration system according to the present invention has an advantage in that it is possible to prevent the outdoor heat exchanger from being frosted, using waste heat of cooling water of the engine and waste heat of the generator, and to enhance the heating performance of the indoor heat exchanger, using waste heat of exhaust gas of the engine.

In addition, the cogeneration system according to the present invention has an advantage in that waste heat of exhaust gas is used to defrost the outdoor heat exchanger when outdoor temperature corresponds to a temperature, at which the outdoor heat exchanger may be easily frosted, and the waste heat of the exhaust gas is used to enhance the heating performance of the indoor heat exchanger when the outdoor temperature does not correspond to the easy-frost temperature, so that the cogeneration system can positively cope with the outdoor temperature while exhibiting a high energy efficiency.

### BRIEF DESCRIPTION OF THE DRAWINGS

The above objects, and other features and advantages of the present invention will become more apparent after reading the following detailed description when taken in conjunction with the drawings, in which:
FIG. 1 is a schematic diagram of a cogeneration system according to a first embodiment of the present invention;
FIG. 2 is a schematic view of a cogeneration system according to a second embodiment of the present invention, illustrating a state in which a heat consumer operates in a heating mode;
FIG. 3 is a schematic view of the cogeneration system according to the second embodiment of the present invention, illustrating a state in which the heat consumer operates in a cooling mode;
FIG. 4 is a schematic view of a cogeneration system according to a third embodiment of the present invention, illustrating a state in which a heat consumer operates in a heating mode and in a defrosting mode;
FIG. 5 is a schematic diagram of the cogeneration system according to the third embodiment of the present invention, illustrating a state in which the heat consumer operates in the heating mode, but not in the defrosting mode;
FIG. 6 is a schematic diagram of the cogeneration system according to the third embodiment of the cogeneration system, illustrating a state in which the heat pump type air conditioner operates in a cooling mode;
FIG. 7 is a schematic diagram of a cogeneration system according to a fourth embodiment of the present invention;
FIG. 8 is a schematic diagram of a cogeneration system according to a fifth embodiment of the present invention; and
FIG. 9 is a schematic diagram of a cogeneration system according to a sixth embodiment of the present invention.

### DESCRIPTION OF THE PREFERRED EMBODIMENTS

Hereinafter, exemplary embodiments of a cogeneration system according to the present invention will be described with reference to the annexed drawings.

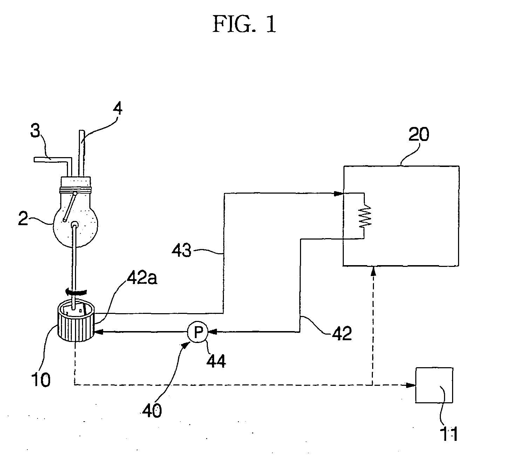

FIG. 1 is a schematic diagram of a cogeneration system according to a first embodiment of the present invention.

As shown in FIG. 1, the cogeneration system includes an engine 2, a generator 10 connected to an output shaft of the engine 2 to generate electricity, and a waste heat recovering means 40 to recover waste heat of the generator 10, and to transfer the recovered waste heat to a heat consumer 20.

The engine 2 includes a combustion chamber defined in the interior of the engine 2.

A fuel tube 3 and an exhaust tube 4 are connected to the engine 2. The fuel tube 3 is adapted to supply fuel such as liquefied gas or liquefied petroleum gas into the combustion chamber. The exhaust tube 4 is adapted to guide exhaust gas discharged from the combustion chamber.

The generator 10 may be an AC generator or a DC generator.

The electricity generated from the generator 10 is used in various electrical devices 11 such as electric lamps and in the heat consumer 20.

The heat consumer 20 may comprise at least one of a water-heating heat exchanger and an air conditioner.

The waste heat recovering means 40 includes heat medium circulation conduits 42 and 43 to guide a heat medium to be circulated through the generator 10 and heat consumer 20, and a heat medium circulation pump 44 to pump the heat medium, and thus, to circulate the heat medium through the heat medium circulation conduits 42 and 43.

One of the heat medium circulation conduits 42 and 43, for example, the heat medium circulation conduit 42 in the illustrated case, has a portion 42a, which passes through the generator 10, to recover waste heat from the generator 10 while cooling the generator 10 by use of cooling water.

Hereinafter, operation of the cogeneration system having the above-described arrangement will be described.

When fuel is supplied into the engine 2 via the fuel tube 3, and the engine 2 is subsequently driven, the output shaft of the engine 2 is rotated, thereby causing the generator 10 to generate electricity. The electricity generated from the generator 10 is supplied to various electrical devices 11 such as electric lamps and the heat consumer 20.

Meanwhile, when the heat medium circulation pump 44 operates, a heat medium in the heat medium circulation conduit 42 is fed to the generator 10. The heat medium absorbs heat generated during the operation of the generator 10, so that heat release of the generator 10 is achieved. The heat medium is then fed to the heat consumer 20 via the heat medium circulation conduit 43, so that the heat medium transfers the heat absorbed from the generator 10 to the heat consumer 20.

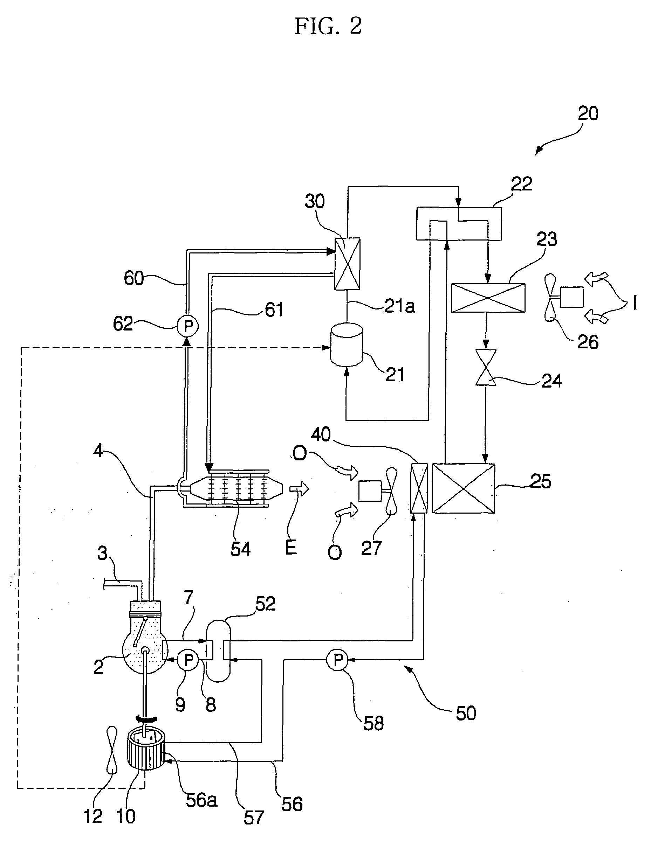

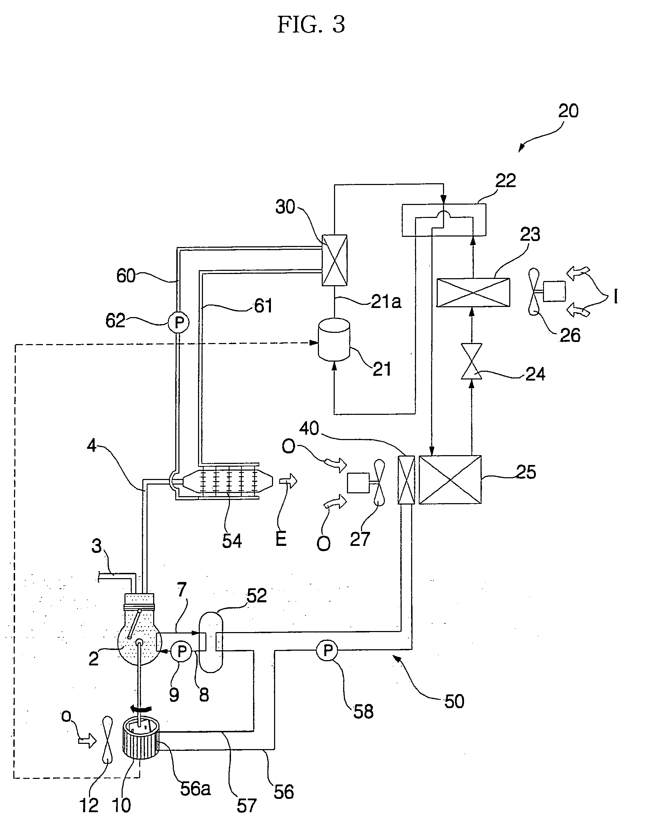

FIG. 2 is a schematic view of a cogeneration system according to a second embodiment of the present invention, illustrating a state in which a heat consumer operates in a heating mode. FIG. 3 is a schematic view of the cogeneration system according to the second embodiment of the present invention, illustrating a state in which the heat consumer operates in a cooling mode.

As shown in FIGS. 2 and 3, the cogeneration system includes an engine 2, a generator 10 connected to an output shaft of the engine 2 to generate electricity, and a waste heat recovering means 50 to recover waste heat of the engine 2 and waste heat of the generator 10, and to transfer the recovered waste heat to a heat consumer 20.

The engine 2 includes a combustion chamber defined in the interior of the engine 2. A fuel tube 3 and an exhaust tube 4 are connected to the engine 2. The fuel tube 3 is adapted to supply fuel such as liquefied gas or liquefied petroleum gas into the combustion chamber. The exhaust tube 4 is adapted to guide exhaust gas discharged from the combustion chamber.

A cooling water heat exchanger 52 is connected to the engine 2 via cooling water circulation conduits 7 and 8 so that cooling water, which is heated while cooling the engine 2, transfers heat to the cooling water heat exchanger 52 while passing through the cooling water heat exchanger 52, and is then again circulated into the engine 2.

A cooling water circulation pump 9 is connected to one of the engine 2, cooling water heat exchanger 52, and cooling water circulation conduits 7 and 8.

The generator 10 may be an AC generator or a DC generator.

The heat consumer 20 may comprise an air conditioner only for heating purposes or a heat pump type air conditioner switchable between a cooling mode and a heating mode. The following description will be described only in conjunction with the case in which the heat consumer 20 comprises a heat pump type air conditioner.

The heat pump type air conditioner 20 includes a compressor 21, a directional valve 22, an indoor heat exchanger 23, an expansion device 24, and an outdoor heat exchanger 25.

The heat pump type air conditioner 20 further includes an indoor fan or blower 26 to blow indoor air to the indoor heat exchanger 23, and an outdoor fan or blower 27 to blow outdoor air to the outdoor heat exchanger 25.

In a heating operation of the heat pump type air conditioner 20, refrigerant, which has been compressed in the compressor 21, flows through the directional valve 22, indoor heat exchanger 23, expansion device 24, outdoor heat exchanger 25, and directional valve 22, in this order, and then enters the compressor 21, as shown in FIG. 2. Thus, the refrigerant is circulated. In this operation, the outdoor heat exchanger 25 functions as an evaporator, whereas the indoor heat exchanger 23 functions as a condenser, and thus, discharges heat to indoor air I.

On the other hand, in a cooling operation of the heat pump type air conditioner 20, refrigerant, which has been compressed in the compressor 21, flows through the directional valve 22, outdoor heat exchanger 25, expansion device 24, indoor heat exchanger 23, and directional valve 22, in this order, and then enters the compressor 21, as shown in FIG. 3. Thus, the refrigerant is circulated. In this operation, the outdoor heat exchanger 25 functions as a condenser, whereas the indoor heat exchanger 23 functions as an evaporator, and thus, absorbs heat from indoor air I.

A compressor discharge line heater 30 is arranged at a discharge line 21a of the compressor 21 to heat a refrigerant passing through the discharge line 21a, using the heat recovered by the waste heat recovering means 50.

A pre-heater 40 is arranged at the side of an outdoor air suction section of the outdoor heat exchanger 25 to pre-heat outdoor air O blown toward the outdoor heat exchanger 25, using the heat recovered by the waste heat recovering means 50.

The cooling water heat exchanger 52, which absorbs heat from the cooling water used to cool the engine 2, is included in the waste heat recovering means 50. The waste heat controller 50 also includes an exhaust gas heat exchanger 54 to absorb heat from exhaust gas discharged from the engine 2, first heat medium circulation conduits 56 and 57 to guide a first heat medium to be circulated through the generator 10, cooling water heat exchanger 52 and pre-heater 40, a first circulation pump 58 to pump the first heat medium for the circulation of the first heat medium through the first heat medium circulation conduits 56 and 57, second heat medium circulation conduits 60 and 61 to guide a second heat medium to be circulated through the exhaust gas heat exchanger 54 and compressor discharge line heater 30, and a second circulation pump 62 to pump the second heat medium for the circulation of the second heat medium through the second heat medium circulation conduits 60 and 61.

One of the first heat medium circulation conduits 56 and 57, for example, the heat medium circulation conduit 56 in the illustrated case, has a portion 56a, which passes through the generator 10, to recover waste heat from the generator 10 while cooling the generator 10 by use of cooling water.

Reference numeral 12 designates a radiator fan to release heat from the generator 10 during the cooling operation of the heat pump type air conditioner 20.

Hereinafter, operation of the cogeneration system having the above-described arrangement will be described.

When fuel is supplied into the engine 2 via the fuel tube 3, and the engine 2 is subsequently driven, the output shaft of the engine 2 is rotated, thereby causing the generator 10 to generate electricity.

Exhaust gas generated from the engine 2 is discharged to the atmosphere after passing around the exhaust gas heat exchanger 54.

When the cooling water circulation pump 9 operates during the operation of the engine 2, the cooling water, which is heated while cooling the engine 2, is fed to the cooling water heat exchanger 52 via the cooling water circulation conduit 7, and is then circulated into the engine 2 via the cooling water circulation conduit 8 after releasing its heat into the cooling water heat exchanger 52.

Meanwhile, during the heating operation of the heat pump type air conditioner 20, the first and second heat medium circulation pumps 58 and 62 operate. Also, the directional valve 22 is switched to a heating mode, and the compressor 21 is driven by the electricity generated from the generator 10.

When the first heat medium circulation pump 58 operates, the first heat medium in the first heat medium circulation conduit 56 is fed to the generator 10, so that the first heat medium absorbs heat generated during the operation of the generator 10. That is, the first heat medium is heated while releasing heat from the generator 10.

The first heat medium heated by the generator 10 is fed to the cooling water heat exchanger 52 via the first heat medium circulation conduit 57, so that the first heat medium is re-heated by the heat of the cooling water heat exchanger 52. Thereafter, the first heat medium is fed to the pre-heater 40.

The first heat medium is then circulated into the generator 10 after heating the pre-heater 40. Thus, the first heat medium absorbs heat from the generator 10 and cooling water heat exchanger 52, and transfers the absorbed heat to the pre-heater 40 while repeating the above-described circulation.

On the other hand, when the second heat medium circulation pump 62 operates, the second heat medium in the second heat medium circulation conduit 61 is pumped to the exhaust gas heat exchanger 54, so that the second heat medium absorbs heat from exhaust gas while passing through the exhaust gas heat exchanger 54. Thus, the second heat medium is heated. The heated second heat medium is fed to the compressor discharge line heater 30 via the second heat medium circulation conduit 62.

The second heat medium is then circulated into the exhaust gas heat exchanger 54 after heating the discharge line 21a of the compressor 21 through the compressor discharge line heater 30. Thus, the second heat medium absorbs heat from the exhaust gas heat exchanger 54, and transfers the absorbed heat to the discharge line 21a of the compressor 21 while repeating the above-described circulation.

When the directional valve 22 is switched to the heating mode, and the compressor 21 operates during the above-described heat transfer, the compressor 21 compresses low-temperature and low-pressure refrigerant gas, thereby changing the refrigerant gas into a high-temperature and high-pressure state. The high-temperature and high-pressure refrigerant gas is heated by the compressor discharge line heater 30 while passing through the discharge line 21a.

The heated refrigerant passes through the indoor heat exchanger 23 via the directional valve 22, thereby increasing the indoor temperature over the case in which the refrigerant is not heated by the compressor discharge line heater 30.

The refrigerant, which passes through the indoor heat exchanger 23, is condensed in accordance with heat exchange with indoor air I. The condensed refrigerant passes through the expansion device 24, outdoor heat exchanger 25, and directional valve 22, in this order, and then enters the compressor 21. Thus, the refrigerant is circulated.

Meanwhile, outdoor air O blown to the outdoor heat exchanger 25 is heated by the pre-heater 40, and then passes around the outdoor heat exchanger 25, so that the outdoor heat exchanger 25 is prevented from being frosted.

On the other hand, when the heat pump type air conditioner 20 is to operate in a cooling mode, the first and second heat medium circulation pumps 58 and 62 are stopped. Also, the directional valve 22 is switched to the cooling mode, and the compressor 21 is driven by the electricity generated from the generator 10.

When the directional valve 22 is switched to the cooling mode, and the compressor 21 operates, the compressor 21 compresses low-temperature and low-pressure refrigerant gas, thereby changing the refrigerant gas into a high-temperature and high-pressure state. The high-temperature and high-pressure refrigerant gas passes through the directional valve 22, outdoor heat exchanger 25, and expansion device 24, indoor heat exchanger 23, and directional valve 22, in this order. Thereafter, the refrigerant gas is circulated into the compressor 21.

Meanwhile, the cooling water heat exchanger 52 releases the heat absorbed from the cooling water to the atmosphere, whereas the exhaust gas heat exchanger 54 releases the heat absorbed from the exhaust gas to the atmosphere.

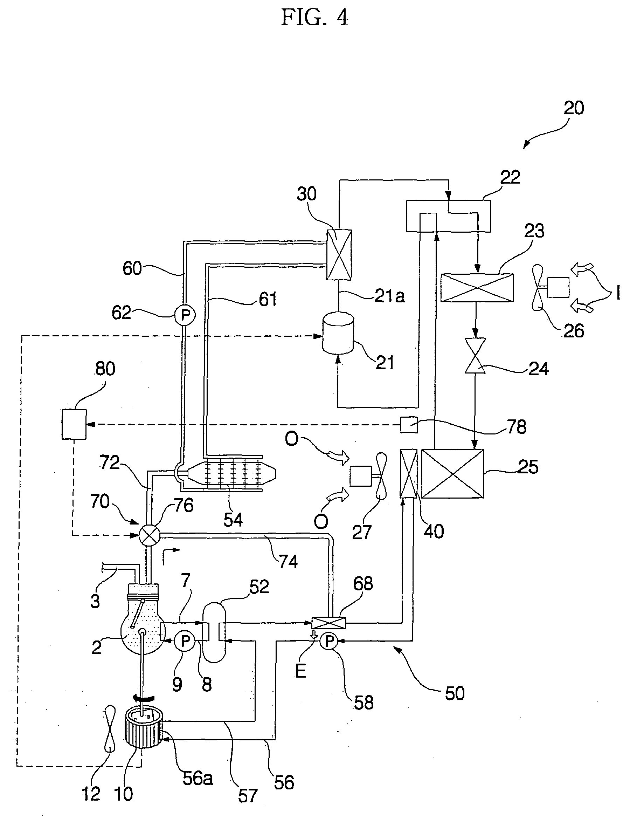

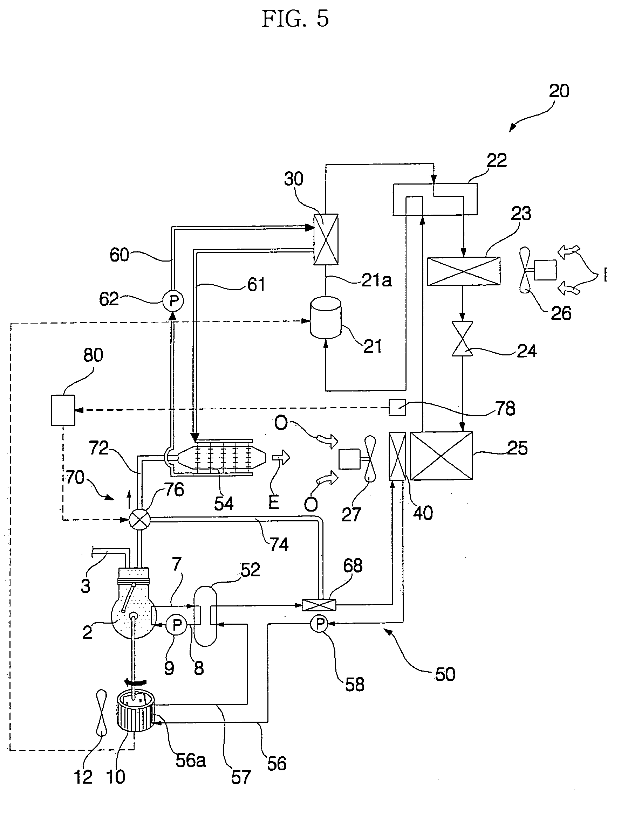

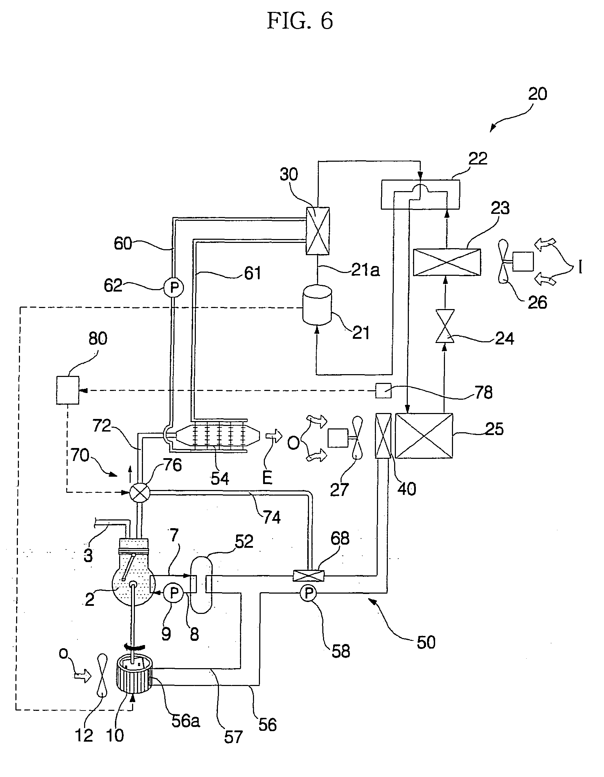

FIG. 4 is a schematic view of a cogeneration system according to a third embodiment of the present invention, illustrating a state in which a heat consumer operates in a heating mode and in a defrosting mode. FIG. 5 is a schematic diagram of the cogeneration system according to the third embodiment of the present invention, illustrating a state in which the heat consumer operates in the heating mode, but not in the defrosting mode. FIG. 6 is a schematic diagram of the cogeneration system according to the third embodiment of the cogeneration system, illustrating a state in which the heat pump type air conditioner operates in a cooling mode.

As shown in FIGS. 4 to 6, the cogeneration system includes a heat medium heater 68 arranged at a first heat medium circulation conduit 57 to heat a first heat medium emerging from a cooling water heat exchanger 52, and an exhaust gas path switching means 70 to selectively supply exhaust gas discharged from an engine 2 to the heat medium heater 68 or to an exhaust gas heat exchanger 54. The cogeneration system of the third embodiment has the same configuration and functions as those of the second embodiment, except for the heat medium heater 68 and exhaust gas path switching means 70. Accordingly, the constituent elements of the third embodiment respectively corresponding to those of the second embodiment are designated by the same reference numerals, and no detailed description thereof will be given.

The exhaust gas path switching means 80 includes an exhaust conduit 72 to guide the exhaust gas discharged from the engine 2 to the exhaust gas heat exchanger 54, a branched conduit 74, which is branched from the exhaust conduit 72, and connected to the heat medium heater 74, and a control valve 76 to alternately open/close the exhaust conduit 72 and branched conduit 74.

The exhaust conduit 72 is connected between the engine 2 and the exhaust gas heat exchanger 54.

Although only one control valve 76 is used to alternately open/close the exhaust conduit 72 and branched conduit 74 such that, when one of the conduits 72 and 74 is opened, the other conduit is closed, in the illustrated case, two control valves may be arranged at respective conduits 72 and 74 to independently open/close respective conduits 72 and 74. The following description will be given only in conjunction with the case in which, when one of the conduits 72 and 74 is opened, the other conduit is closed.

The exhaust gas path switching means 70 further includes a temperature sensor 78 arranged at one side of the heat pump type air conditioner 20 to measure the temperature of outdoor air or the temperature of the outdoor heat exchanger 25, and a controller 80 to control the control valve 76 based on the temperature measured by the temperature sensor 78 and whether the heat pump type air conditioner 20 operates in a heating mode or in a cooling mode.

When the heat pump type air conditioner 20 operates in the heating mode, and the temperature measured by the temperature sensor 78 corresponds to a predetermined temperature (for example, -3°C to -5°C), the controller 80 determines that the heat pump type air conditioner 20 must operate in the defrosting mode, and thus, controls the control valve 76 to close the exhaust conduit 72 and to open the branched conduit 74, as shown in FIG. 4.

On the other hand, when the heat pump type air conditioner 20 operates in the heating mode, and the temperature measured by the temperature sensor 78 does not correspond to the predetermined temperature (for example, -3°C to -5°C), or when the heat pump type air conditioner 20 operates in the cooling mode, the controller 80 controls the control valve 76 to open the exhaust conduit 72 and to close the branched conduit 74.

Hereinafter, operation of the cogeneration system having the above-described arrangement will be described.

When the heat pump type air conditioner 20 operates in the heating mode and in the defrosting mode, the controller 80 controls the control valve 76 to close the exhaust conduit 72 and to open the branched conduit 74. Also, the first heat medium circulation pump 58 is driven, so that the first heat medium is circulated through the generator 10, cooling water heat exchanger 52, heat medium heater 68, and pre-heater 40.

Exhaust gas E discharged from the engine 2 is guided to the heat medium heater 68 via the branched conduit 74, and is then discharged to the atmosphere after releasing its heat into the heat medium heater 68, as shown in FIG. 4.

During the operation of the first heat medium circulation pump 58, the first heat medium, which is heated by the cooling water heat exchanger 52, is re-heated by the heat medium heater 68, so that the first heat medium has a temperature increased over the case in which the first heat medium is not heated by the heat medium heater 68.

Outdoor air O blown toward the outdoor heat exchanger 25 is further heated by the pre-heater 40. Accordingly, the effect of defrosting the outdoor heat exchanger 25 is maximized.

On the other hand, when the heat pump type air conditioner 20 operates in the heating mode, but not in the defrosting mode, the controller 80 controls the control valve 76 to open the exhaust conduit 72 and to close the branched conduit 74. In this case, the first heat medium circulation pump 58 is also driven, so that the first heat medium is circulated through the generator 10, cooling water heat exchanger 52, heat medium heater 68, and pre-heater 40. Also, the second heat medium circulation pump 62 is driven, so that the second heat medium is circulated through the exhaust gas heat exchanger 54 and compressor discharge line heater 30.

In this case, exhaust gas E discharged from the engine 2 is guided to the exhaust gas heat exchanger 54 via the exhaust conduit 72, and is then discharged to the atmosphere after releasing its heat into the exhaust gas heat exchanger 54, as shown in FIG. 5.

The operations of the first and second heat medium circulation pumps 58 and 62, and the enhancement of the heating performance of the indoor heat exchanger 23 and the effect of defrosting the outdoor heat exchanger 25 respectively achieved by those operations are the same as those of the second embodiment, so that no detailed description thereof will be given.

When the heat pump type air conditioner 20 operates in the cooling mode, the controller 80 controls the control valve 76 to open the exhaust conduit 72 and to close the branched conduit 74.

In this case, exhaust gas E discharged from the engine 2 is guided to the exhaust gas heat exchanger 54 via the exhaust conduit 72, and is then discharged to the atmosphere after releasing its heat into the exhaust gas heat exchanger 54, as shown in FIG. 6. The exhaust gas heat exchanger 54 releases the heat absorbed from the exhaust gas to the atmosphere.

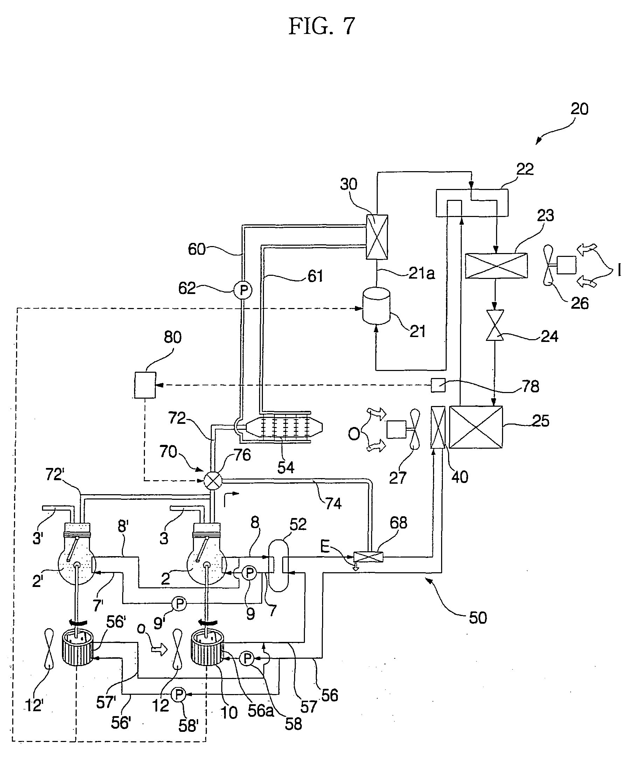

FIG. 7 is a schematic diagram of a cogeneration system according to a fourth embodiment of the present invention.

As shown in FIG. 7, the cogeneration system includes a plurality of engines 2, 2'.... The cogeneration system also includes a plurality of generators 10, 10'... connected to respective shafts of the engines 2, 2'.... The cogeneration system of the second embodiment has the same configuration and functions as those of the second and third embodiments, except for the engines 2, 2'... and generators 10, 10'.... Accordingly, the constituent elements of the fourth embodiment respectively corresponding to those of the first and second embodiments are designated by the same reference numerals, and no detailed description thereof will be given.

One or more of the engines 2, 2'... operate in accordance with the load to be cooled or heated.

Fuel tubes 3, 3' ... and exhaust gas tubes 4, 4' ... are connected to respective engines 2, 2'.... Exhaust conduits 72, 72'... are also connected to respective engines 2, 2'.... Also, pairs of cooling water circulation conduits 7 and 8, 7' and 8'... are connected to respective engines 2, 2'....

The exhaust gas tubes 4, 4'... are connected in parallel.

The cooling water circulation conduits 7 and 8, 7' and 8'... are connected in parallel.

Cooling water circulation pumps 9, 9'... are directly connected to the cooling water circulation conduit 7 or 8, cooling water circulation conduit 7' or 8'..., respectively.

Pairs of first heat medium circulation conduits 56 and 57, 56' and 57'... are connected to respective generators 10, 10'....

The first heat medium circulation conduits 56 and 57, 56' and 57'... are connected in parallel.

First heat medium circulation pumps 58, 58'... are directly connected to the first heat medium circulation conduit 56 or 57, first heat medium circulation conduit 56' or 57'..., respectively.

When the heat consumer of the cogeneration system according to this embodiment, that is, the heat pump type air conditioner 20, operates in a cooling mode, the first heat medium circulation pumps 58, 58'... are driven. Accordingly, a first heat medium is distributed into the generators 10, 10'... via the first heat medium circulation conduits 56 and 57, 56' and 57'..., to absorb heat from the generators 10, 10'..., respectively. Thereafter, flows of the first heat medium emerging from the generators 10, 10'... are joined. The joined first heat medium is introduced into the pre-heater 40 to transfer the heat absorbed from the generators 10, 10'... to the pre-heater 40.

Other functions of the fourth embodiment are the same as those of the second or third embodiment, so that no detailed description thereof will be given.

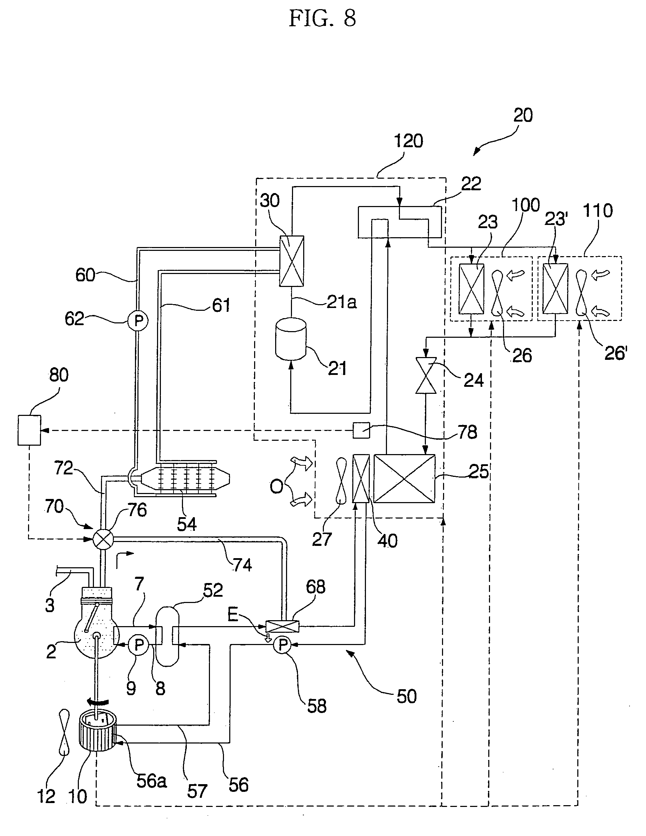

FIG. 8 is a schematic diagram of a cogeneration system according to a fifth embodiment of the present invention.

As shown in FIG. 8, the heat pump type air conditioner, that is, the heat pump type air conditioner 20, which is included in the cogeneration system, is of a multi-type. That is, the heat pump type air conditioner 20 includes a plurality of indoor units 100, 110..., and a single outdoor unit 120. The indoor units 100, 110... include indoor heat exchangers 23, 23'..., which are connected in parallel, respectively.

The cogeneration system of this embodiment has the same configuration and functions as those of any one of the second through fourth embodiments, except that the heat pump type air conditioner 20 includes a plurality of indoor units 100, 110..., and thus, a plurality of indoor heat exchangers 23, 23'.... Accordingly, the constituent elements of the fifth embodiment respectively corresponding to those of any one of the second through fourth embodiments are designated by the same reference numerals, and no detailed description thereof will be given.

The indoor units 100, 110... also include indoor fan or blowers 26, 26'..., respectively.

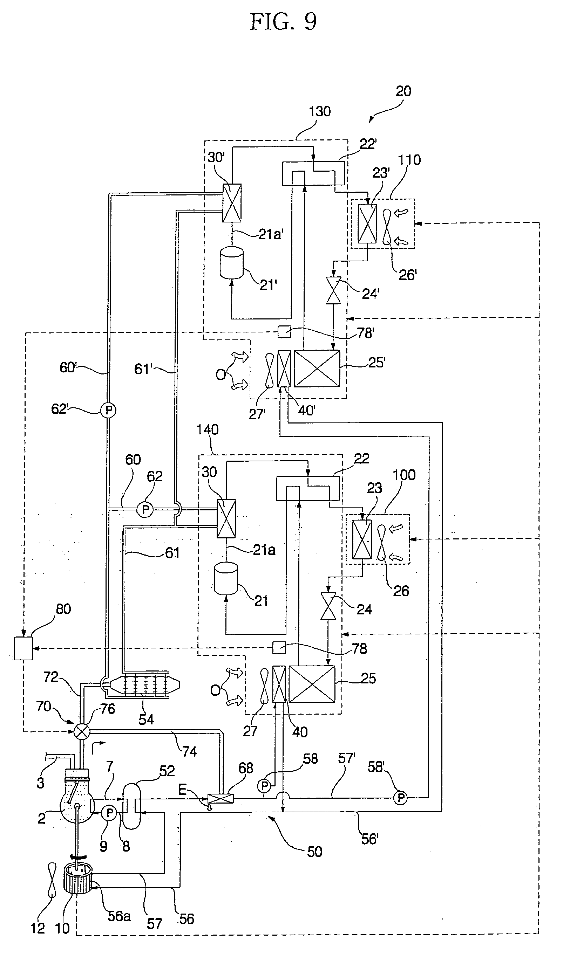

FIG. 9 is a schematic diagram of a cogeneration system according to a sixth embodiment of the present invention.

As shown in FIG. 9, the heat pump type air conditioner, that is, the heat pump type air conditioner 20, which is included in the cogeneration system, includes a plurality of indoor units 100, 110..., and a plurality of outdoor units 120, 130....

In the heat pump type air conditioner 20, refrigerant conduits respectively included in the indoor units 100, 110... may be connected in parallel. Refrigerant conduits respectively included in the outdoor units 120, 130... may also be connected in parallel. The following description will be given in conjunction with the case in which each of the outdoor units 120, 130... are connected to an associated one of the indoor units 100, 110... to constitute one air conditioner set, and each air conditioner set operates independently of other air conditioner sets.

The indoor units 100, 110... include respective indoor heat exchangers 23, 23'..., and respective indoor fans or blowers 26, 26'....

The outdoor units 120, 130... include respective compressors 21, 21'..., directional valves 22, 22'..., respective expansion devices 24, 24'..., respective outdoor heat exchangers 25, 25'..., and respective outdoor fans or blowers 27, 27'....

Compressor discharge line heaters 30, 30'... are arranged at respective discharge lines 21a, 21'a... of the compressors 21, 21' ....

Pairs of second heat medium circulation conduits 60 and 61, 60' and 61'..., which are connected in parallel, are connected to respective compressor discharge line heaters 30, 30'.... to guide a second heat medium to be circulated through the compressor discharge line heaters 30, 30'....

Second heat medium circulation pumps 62, 62'... are directly connected to respective second heat medium circulation conduits 60 and 61, 60' and 61'....

Pre-heaters 40, 40'... are arranged upstream from respective outdoor heat exchangers 25, 25'... to pre-heat outdoor air blown to the outdoor heat exchangers 25, 25' ..., respectively.

Pairs of first heat medium circulation conduits 56 and 57, 56' and 57'..., which are connected in parallel, are connected to respective pre-heaters 40, 40'.... to guide a first heat medium to be circulated through the pre-heaters 40, 40'....

First heat medium circulation pumps 58, 58'... are directly connected to respective first heat medium circulation conduits 56 and 57, 56' and 57'....

The cogeneration system of this embodiment has the same configuration and functions as those of any one of the second through fifth embodiments, except that the heat pump type air conditioner 20 includes a plurality of indoor units 100, 110..., a plurality of outdoor units 120, 130..., a plurality of compressor discharge line heaters 30, 30'..., a plurality of pre-heaters 40, 40'..., a plurality of first heat medium circulation conduits 56, 57, 56', 57'..., and a plurality of second heat medium circulation conduits 60, 61, 60', 61'.... Accordingly, the constituent elements of the sixth embodiment respectively corresponding to those of any one of the second through fifth embodiments are designated by the same reference numerals, and no detailed description thereof will be given.

The cogeneration system according to any one of the above-described embodiments of the present invention has various effects.

That is, the cogeneration system according to the present invention has an advantage in that waste heat of the generator is supplied to the heat consumer, so that it is possible to enhance the energy efficiency of the cogeneration system and to release heat from the generator.

The cogeneration system according to the present invention also has an advantage in that waste heat of the generator and waste heat of the engine are supplied to the heat consumer, so that it is possible to enhance the energy efficiency of the cogeneration system.

Also, the cogeneration system according to the present invention has an advantage in that it is possible to prevent the outdoor heat exchanger from being frosted, using waste heat of cooling water of the engine and waste heat of the generator, and to enhance the heating performance of the indoor heat exchanger, using waste heat of exhaust gas of the engine.

In addition, the cogeneration system according to the present invention has an advantage in that waste heat of exhaust gas is used to defrost the outdoor heat exchanger when outdoor temperature corresponds to a temperature, at which the outdoor heat exchanger may be easily frosted, and the waste heat of the exhaust gas is used to enhance the heating performance of the indoor heat exchanger when the outdoor temperature does not correspond to the easy-frost temperature, so that the cogeneration system can positively cope with the outdoor temperature while exhibiting a high energy efficiency.

Although the preferred embodiments of the invention have been disclosed for illustrative purposes, those skilled in the art will appreciate that various modifications, additions and substitutions are possible, without departing from the scope and spirit of the invention as disclosed in the accompanying claims.

## Claims

1. A cogeneration system comprising:
an engine;
a generator connected to an output shaft of the engine to generate electricity; and
waste heat recovering means to recover waste heat of the generator and to transfer the recovered waste heat to a heat consumer.

2. The cogeneration system according to claim 1, wherein the waste heat recovering means comprises:
a heat medium circulation conduit to guide a heat medium to be circulated through the generator and the heat consumer; and
a heat medium circulation pump to pump the heat medium, and thus, to circulate the heat medium to be circulated through the heat medium circulation conduit.

3. A cogeneration system comprising:
an engine;
a generator connected to an output shaft of the engine to generate electricity; and
waste heat recovering means to recover waste heat of the engine and waste heat of the generator and to transfer the recovered waste heat to a heat consumer.

4. The cogeneration system according to claim 3, wherein the waste heat recovering means comprises:
a cooling water heat exchanger to absorb heat from cooling water used to cool the engine;
an exhaust gas heat exchanger to absorb heat from exhaust gas discharged from the engine;
a first heat medium circulation conduit to guide a first heat medium to be circulated through the generator, the cooling water heat exchanger, and the heat consumer; and
a second heat medium circulation conduit to guide a second heat medium to be circulated through the exhaust gas heat exchanger and the heat consumer.

5. The cogeneration system according to claim 4, wherein the waste heat recovering means further comprises:
a first heat medium circulation pump to pump the first heat medium, and thus, to circulate the first heat medium to be circulated through the first heat medium circulation conduit; and
a second heat medium circulation pump to pump the second heat medium, and thus, to circulate the second heat medium to be circulated through the second heat medium circulation conduit.

6. The cogeneration system according to claim 5, wherein the waste heat recovering means further comprises:
a heat medium heater to heat the first heat medium emerging from the cooling water heat exchanger; and
exhaust gas path switching means to supply the exhaust gas discharged from the engine to the heat medium heater or to the exhaust gas heat exchanger.

7. The cogeneration system according to claim 6, wherein the exhaust gas path switching means comprises:
an exhaust conduit to guide the exhaust gas discharged from the engine to the exhaust gas heat exchanger;
a branched conduit, which is branched from the exhaust conduit, and connected to the heat medium heater; and
a control valve to alternately open/close the exhaust conduit and the branched conduit.

8. The cogeneration system according to any one of claims 4 to 7, wherein the heat consumer is a heat pump type air conditioner, which uses the electricity generated from the generator, and comprises a compressor, a directional valve, an outdoor heat exchanger, an expansion device, and an indoor heat exchanger.

9. The cogeneration system according to claim 8, wherein the heat pump type air conditioner further comprises:
a pre-heater to pre-heat outdoor air blown toward the outdoor heat exchanger, using heat of the heat medium, which is circulated through one of the first and second heat medium circulation conduits; and
a compressor discharge line heater to heat a refrigerant passing through a discharge line of the compressor, using heat of the heat medium, which is circulated through the other one of the first and second heat medium circulation conduits.

10. The cogeneration system according to claim 9, wherein at least one of the engine, the generator, the compressor, the directional valve, the outdoor heat exchanger, the expansion device, the indoor heat exchanger, the pre-heater, and the compressor discharge line heater comprises a plurality of ones.

11. A cogeneration system comprising:
an engine;
a generator connected to an output shaft of the engine to generate electricity;
a heat pump type air conditioner, which uses the electricity generated from the generator, and comprises a compressor, a directional valve, an outdoor heat exchanger, an expansion device, and an indoor heat exchanger;
a pre-heater to pre-heat outdoor air blown toward the outdoor heat exchanger;
a compressor discharge line heater to heat a refrigerant passing through a discharge line of the compressor; and
waste heat recovering means to transfer, to the pre-heater, waste heat of the generator, heat of cooling water of the engine, and heat of exhaust gas of the engine when the heat pump type air conditioner operates in a heating mode under a condition in which the outdoor heat exchanger is frosted, and to transfer the waste heat of the generator and the cooling water heat of the engine to the pre-heater and the exhaust gas heat of the engine to the discharge line of the compressor when the heat pump type air conditioner operates in the heating mode, but not under the condition in which the outdoor heat exchanger is frosted.
